# EUROPÄISCHE PATENTANMELDUNG

(11) **EP 2 750 335 A2**
(43) Veröffentlichungstag der Anmeldung: **02.07.2014**
(21) Anmeldenummer: 13190245.4
(22) Anmeldetag: 25.10.2013
(51) Int. Cl.: H04L 12/28

(54) **Steckbares Interaktionsgerät**

(30) Priorität: 27.12.2012 DE 102012224396
(71) Anmelder: Siemens Aktiengesellschaft, 80333 München (DE)
(72) Erfinder: Eckl, Roland, 91301 Forchheim (DE); MacWilliams, Asa, Dr., 82256 Fürstenfeldbruck (DE)

(57) **Zusammenfassung**

Interaktionsgerät (10, 10a, 10b, 10c) für eine Gebäudeinfrastruktur, umfassend ein Basisgerät (40) und einen auf das Basisgerät aufsteckbaren Aufsatz (50, 50a, 50b, 50c);
wobei der Aufsatz (50, 50a, 50b, 50c) mindestens ein Interaktionselement (54, 54a, 54b, 56, 56c, 57, 57b, 57c, 58, 58c, 59, 59b, 59c) und ein aufsatzseitiges Kommunikationsmittel (51) umfasst;
wobei das Basisgerät (40) ein basisseitiges Kommunikationsmittel (41) umfasst;
wobei das mindestens eine Interaktionselement (54, 54a, 54b, 56, 56c, 57, 57b, 57c, 58, 58c, 59, 59b, 59c) durch das basisseitige Kommunikationsmittel (41) ansteuerbar ist;
wobei durch das aufsatzseitige Kommunikationsmittel (51) eine codierte Beschreibung (55) von Parametern des mindestens einen Interaktionselementes (54, 54a, 54b, 56, 56c, 57, 57b, 57c, 58, 58c, 59, 59b, 59c) an das Basisgerät (40) übermittelbar ist;
und wobei das Basisgerät (40) ausgestaltet und/oder adaptiert ist, anhand der übermittelten codierten Beschreibung (55) der Parameter des Interaktionselementes (54, 54a, 54b, 56, 56c, 57, 57b, 57c, 58, 58c, 59, 59b, 59c) die Ansteuerung des Interaktionselementes (54, 54a, 54b, 56, 56c, 57, 57b, 57c, 58, 58c, 59, 59b, 59c) anzupassen.

## Beschreibung

Die vorliegende Erfindung bezieht sich auf das technische Gebiet der Anpassung eines Interaktionsgerätes für eine Gebäudeinfrastruktur.

In der Gebäudesteuerung setzt man Bediengeräte an Wänden ein, die eine dem Benutzer zugewandte Interaktionsfläche haben. Beispiele sind:
- Wipptaster für die Lichtsteuerung;
- Drehregler für die Temperatursteuerung;
- Schieberegler für die Lüftungssteuerung;
- PIN-Eingabepanels oder Fingerabdruckleser für die Authentifikation;
- Segmentanzeigen für Anzeige von Temperatur, Luftfeuchtigkeit, Wetterdaten;
- Display-Panels für komplexere Systeme, wie Alarmanlagen, Audiosteuerung.

Insbesondere Display-Panels gibt es in sehr verschiedenen Ausführungen (Auflösung, verwendete Technologie wie OLED, Plasma, LCD, usw.) welche eine unterschiedliche Eignung für bestimmte Umgebungen (hell, dunkel, direktes Sonnenlicht, usw.) aufweisen können.

Darüber hinaus können für alle Interaktionsflächen verschiedene Festigkeiten (Spritzwasserfest, wasserdicht, ungeschützt, usw.) ebenfalls für bestimmte Umgebungen (innen, außen, Arbeitsraum, usw.) besser oder schlechter geeignet sein.

Möchte man nun an einer bestimmten Stelle im Raum eine neuartige Funktionalität oder ein neues Design eines Gebäudesteuerungs-Bedienelementes ermöglichen, so muss man heute typischerweise in die physische Gebäudeinstallation eingreifen:
- Bei klassischer Elektroinstallation muss man für eine Funktionsänderung ggf. neue Kabel ziehen (z.B. Erweiterung eines klassischen Lichtschalters auf zwei Wechselschalter an verschiedenen Orten). Dies muss durch eine Elektrofachkraft geschehen und erfordert sogar oft, die Wände aufzubrechen.
- Bei klassischer Elektroinstallation muss man für eine Funktionsänderung manchmal auch nur das Gerät in der Unterputzdose wechseln und neu anschließen (z.B. Ersatz eines klassischen Lichtschalters durch einen Dimmer). Dies muss durch eine Elektrofachkraft geschehen.
- Bei klassischer Elektroinstallation muss man sogar für eine Design-Änderung oft das Gerät in der Unterputzdose wechseln und neu anschließen (z.B. Ersatz eines Lichtschalters durch einen anderen im anderen Design). Dies muss durch eine Elektrofachkraft geschehen.
- Bei der Installation mit Bussystemen (z.B. KNX, siehe http://www.knx.org) muss man typischerweise keine neuen Kabel ziehen, aber ebenfalls oft das Gerät in der Unterputzdose wechseln.

Es gibt heute einige wenige, beschränkte Möglichkeiten, die Funktionalität oder das Design zu ändern, ohne in die physische Gebäudeinstallation einzugreifen:
- Bei der klassischen Elektroinstallation kann man oft Rahmen und Taster-Aufsätze auswechseln, um z.B. innerhalb derselben Produktlinie eines Herstellers die Farbe oder das Design zu ändern. Die Funktionalität bleibt gleich.
- Bei der Installation mit dem Bussystem KNX TP bieten manche Hersteller (z.B. Siemens mit der Gamma instabus-Reihe) bestimmte Geräte mit einem sogenannten Busankoppler (auch BTM oder Bus Tranceiver Module) in der Unterputzdose. Auf diesen Busankoppler wird ein Tasteraufsatz aufgesteckt. Somit kann z.B. ein Vierfach-Taster durch einen Vierfach-Taster in ganz anderem Design ersetzt werden, ohne dass sich die Funktion ändert.

Solche Systeme der oben genannten Art sind aus dem Siemens Katalog ET G1, 2010 bekannt: GAMMA instabus Taster mit BTM werden zusammen mit den zugehörigen Rahmen DELTA line, DELTA miro, DELTA profil oder DELTA style auf einen Busankoppler (BTM) aufgesteckt.

Darüber hinaus ist aus dem Siemens Katalog ET G1, 2013, siehe http://www.hqs.sbt.siemens.com/gip/general/dlc/data/assets/hq /manual/GAMMA ETG1 complete German 2013.pdf, Seite 1/4, bekannt, dass bei manchen KNX-Geräten mit Busankoppler sogar die Funktionalitäten und Bedienmöglichkeiten (in begrenztem Rahmen) ausgetauscht werden können. Dabei kann z.B. ein Zweifach-Taster gegen einen Vierfach-Taster oder einen kombinierten Drehregler und Schieberegler für die Temperatur- und Lüftungssteuerung ersetzt werden. Beispielsweise gibt es auch austauschbare Interaktionselemente beim Gamma Instabus System. In diesem Fall muss dann das entsprechende KNX-Gerät durch eine Neuparametrisierung (etwa über die Software ETS, Engineering Tool Software) in das Gebäudesteuerungs-System eingebunden und mit der entsprechenden Funktionalität versehen werden.

In allen bekannten Fällen sind jedoch die Variationsmöglichkeiten für Veränderungen ohne Eingriff in die Installation stark eingeschränkt. Ein Hersteller bietet vielleicht fünf bis zehn aufsteckbare Taster- und Reglerkombinationen, jeweils in vielleicht fünf Designs. Komplexere Interaktionsgeräte sind nicht mehr steckbar, sondern erfordern bei einer Veränderung einen Austausch des Geräts in der Unterputzdose.

Es gibt heute noch eine weitere Möglichkeit, die Funktionalität oder das Design in beschränktem Maße zu ändern, ohne in die physische Gebäudeinstallation einzugreifen: Programmierte Touchscreens oder Panels. Hier wird ein Panel mit einer (gegebenenfalls berührungsempfindlichen) Anzeige und manchmal auch zusätzlichen Knöpfen oder Tastern fest verbaut. Die Programmierung der Anzeige ist jedoch variabel und kann entweder an der Anzeige selbst vor Ort oder über ein Bussystem oder Netzwerk aus der Ferne geändert werden. Hier kann - im Rahmen der Möglichkeiten, die das Panel zulässt - das Design der angezeigten Elemente oder die Funktionszuordnung der Taster geändert werden. Möchte man hier jedoch statt zwei Hardwaretasten vier haben, muss man heute das Gerät komplett austauschen und neu verkabeln. Ebenso können Hardware-Eigenschaften nicht wie oben beschrieben den jeweiligen Umgebungen (Sonneneinstrahlung, Wasserschutz) angepasst werden, selbst wenn das Design und die Interaktionsmöglichkeiten gleich bleiben sollten.

Aus dem Siemens Katalog ET G1, 2013, siehe http://www.hqs.sbt.siemens.com/gip/general/dlc/data/assets/hq /manual/GAMMA ETG1 complete German 2013.pdf, Seite 16/33, sind Beispiele für solche Panel-Basierte Interaktionsgeräte bekannt, beispielsweise Siemens Synco Living Wohnungszentrale in den Varianten QAX910 und QAX903. Diese beiden Varianten unterscheiden sich bezüglich der Anzahl der Taster. Nur die QAX910 hat die acht Funktionstaster an den Seiten. Die Funktion für den Benutzer ist bei der QAX903 eingeschränkt. Ein Upgrade von der QAX903 auf die QAX910 erfordert einen Austausch des Gerätes, obwohl die interne Hardware nahezu gleich ist.

In der Gebäudesteuerung ist es wünschenswert, den Benutzern eines Gebäudes an einer bestimmten Stelle im Raum eine neuartige Funktionalität oder ein neues Design eines Gebäudesteuerungs-Bedienelementes zu ermöglichen, und hierfür nur möglichst wenig in die physische Gebäudeinstallation eingreifen zu müssen. Beispiele sind:
- Dort, wo bisher ein einfacher Wipptaster für das Ein- und Ausschalten eines Lichts war, soll jetzt eine Dimmersteuerung mit zwei Tasten (auf und ab) sowie einer Segmentanzeige für den aktuellen Wert eingebaut werden.
- Dort, wo bisher eine schwarz-weiß-LCD-Anzeige mit Drucktastern für die Steuerung einer Alarmanlage war, soll nun stattdessen ein farbiges Touchscreen eingesetzt werden.
- Dort, wo bisher ein Nummernblock für eine PIN-Eingabe war, soll jetzt ein Fingerabdruckleser eingesetzt werden.
- Dort, wo bisher ein kombinierter Drehregler und Schieberegler für die Temperatur- und Lüftungssteuerung war, soll nun nur noch ein einfaches Anzeigepanel sein, das die aktuellen Werte anzeigt, aber keine Steuerung zulässt.
- Bei der Planung und dem Bau des Gebäudes steht die genaue Zuordnung von Interaktionsart zu Bedienort noch nicht fest; dies soll erst beim Bezug während einer Begehung mit dem Nutzer des Gebäudes festgelegt werden.

Der vorliegenden Erfindung liegt daher die Aufgabe zugrunde, ein Interaktionsgerät für eine Gebäudeinfrastruktur mit geringem Aufwand vielfältig anpassen zu können.

Diese Aufgabe wird durch die in den unabhängigen Ansprüchen beschriebenen Lösungen gelöst. Vorteilhafte Ausgestaltungen der Erfindung sind in weiteren Ansprüchen angegeben.

Gemäß einem ersten Aspekt betrifft die Erfindung ein Interaktionsgerät für eine Gebäudeinfrastruktur. Das Interaktionsgerät umfasst ein Basisgerät und einen auf das Basisgerät aufsteckbaren Aufsatz. Der Aufsatz umfasst mindestens ein Interaktionselement und ein aufsatzseitiges Kommunikationsmittel. Das Basisgerät umfasst ein basisseitiges Kommunikationsmittel. Das Interaktionselement ist durch das basisseitige Kommunikationsmittel ansteuerbar. Durch das aufsatzseitige Kommunikationsmittel ist eine codierte Beschreibung von Parametern des Interaktionselementes an das Basisgerät übermittelbar. Das Basisgerät ist ausgestaltet und/oder adaptiert, anhand der übermittelten codierten Beschreibung der Parameter des Interaktionselementes die Ansteuerung des Interaktionselementes anzupassen.

Gemäß einem weiteren Aspekt betrifft die Erfindung einen steckbaren Aufsatz für ein Interaktionsgerät für eine Gebäudeinfrastruktur. Der Aufsatz umfasst mindestens ein Interaktionselement, ein aufsatzseitiges Kommunikationsmittel und eine aufsatzseitige Steckverbindung zum Aufstecken des Aufsatzes auf ein Basisgerät. Durch das aufsatzseitige Kommunikationsmittel ist eine codierte Beschreibung von Parametern des Interaktionselementes an das Basisgerät übermittelbar. Gemäß einem weiteren Aspekt betrifft die Erfindung ein Basisgerät für ein Interaktionsgerät für eine Gebäudeinfrastruktur. Das Basisgerät umfassend ein basisseitiges Kommunikationsmittel und eine basisseitige Steckverbindung. Das Basisgerät ist ausgestaltet und/oder adaptiert, einen auf das Basisgerät aufsteckbaren Aufsatz anzusteuern und eine codierte Beschreibung von Parametern des aufsteckbaren Aufsatzes zu empfangen, sowie anhand der empfangenen codierten Beschreibung der Parameter des aufsteckbaren Aufsatzes die Ansteuerung des aufsteckbaren Aufsatzes anzupassen.

Gemäß einem weiteren Aspekt betrifft die Erfindung ein Verfahren zum Anpassen Interaktionsgerätes für eine Gebäudeinfrastruktur. Dabei wird ein Aufsatz auf ein Basisgerät des Interaktionsgerätes aufgesteckt. Eine codierte Beschreibung von Parametern eines Interaktionselementes des Aufsatzes wird von dem Aufsatz an das Basisgerät übermittelt. Das Interaktionselement wird durch das Basisgerät angesteuert. Die Ansteuerung des Interaktionselements wird durch das Basisgerät anhand der an das Basisgerät übermittelten codierten Beschreibung dem Interaktionselement angepasst.

Die Erfindung wird nachfolgend anhand von Ausführungsbeispielen im Zusammenhang mit den Figuren ausführlicher erläutert. Dabei zeigen:
- Figur 1: ein Blockdiagramm eines Interaktionsgeräts für eine Gebäudeinfrastruktur;
- Figur 2: eine Ansicht des Interaktionsgerätes von Figur 1 zusammen mit einer Unterputzdose;
- Figur 3A-3F: Aufsätze mit verschiedenen Anordnungen für Ein- und Ausgabe sowie verschiedenen Anzeigeinhalten; und
- Figur 4: ein Gebäude mit einem Gebäudeautomatisierungssystem.

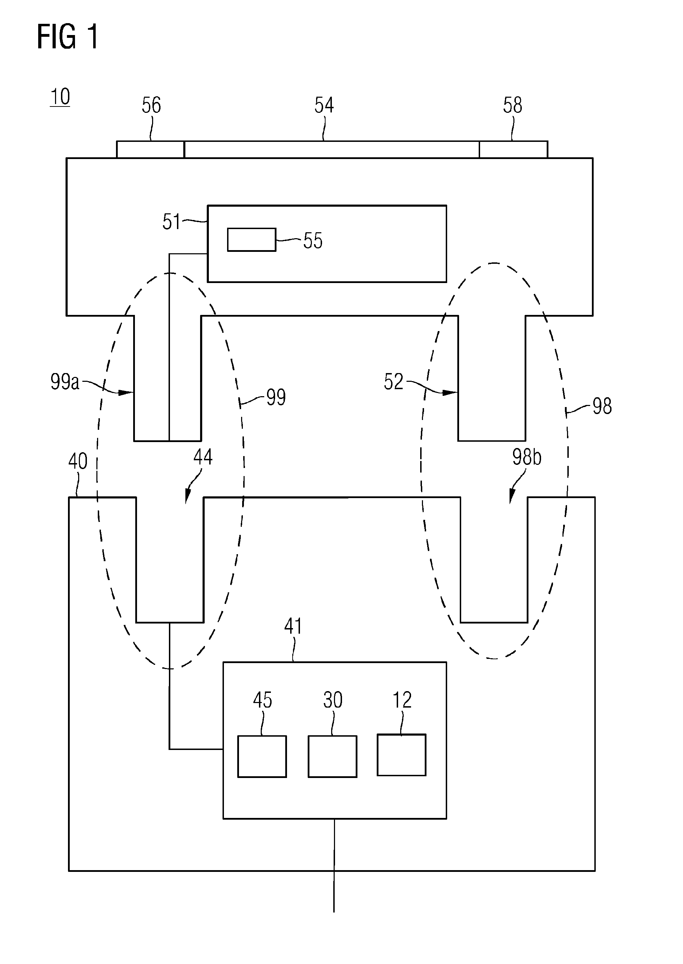

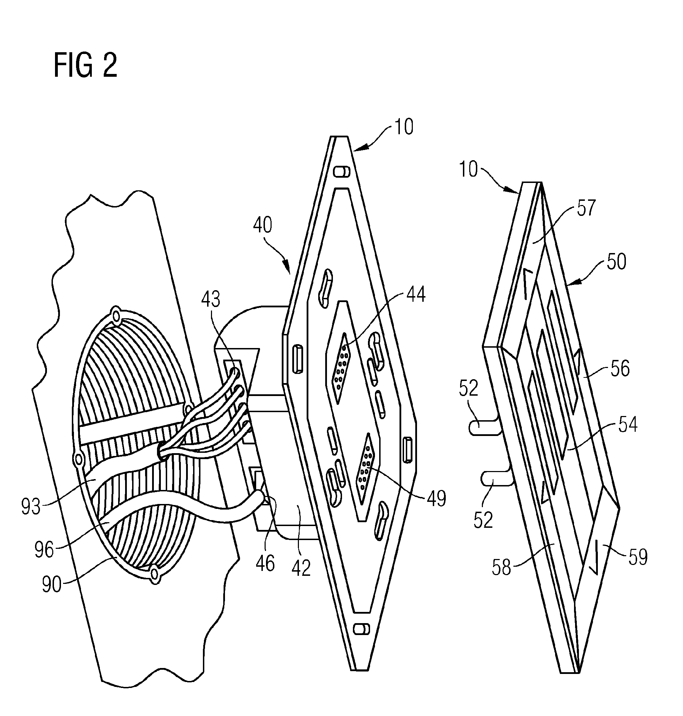

Die Figuren 1 und 2 zeigen ein Interaktionsgerät 10 für eine Gebäudeinfrastruktur. Das Interaktionsgerät 10 umfasst ein Basisgerät 40 und einen auf das Basisgerät 40 aufsteckbaren Aufsatz 50. Der Aufsatz 50 umfasst Interaktionselemente 54, 56, 57, 58, 59, ein aufsatzseitiges Kommunikationsmittel 51 und aufsatzseitige Stecker 52, 99a zum Aufstecken des Aufsatzes 50 auf das Basisgerät 40. Die Interaktionselemente 54, 56, 57, 58, 59 umfassen ein Display 54 und mechanische Schalter 56, 57, 58, 59. Das Basisgerät 40 umfasst ein basisseitiges Kommunikationsmittel 41 und basisseitige Stecker 44, 49, 98b. Ist der Aufsatz 50 auf das Basisgerät 40 aufgesteckt, so sind die Interaktionselemente 54, 56, 57, 58, 59 durch das Basisgerät, vorzugsweise durch das basisseitige Kommunikationsmittel 41 ansteuerbar. Das aufsatzseitige Kommunikationsmittel hat dazu eine codierte Beschreibung 55 von Parametern der Interaktionselemente 54, 56, 57, 58, 59 gespeichert, welche es an das Basisgerät, vorzugsweise an das basisseitige Kommunikationsmittel 41, übermittelt. Das Basisgerät 40, vorzugsweise das basisseitige Kommunikationsmittel 41 ist ausgestaltet und/oder adaptiert, anhand der empfangenen codierten Beschreibung 55 der Parameter der Interaktionselemente 54, 56, 57, 58, 59 die Ansteuerung der Interaktionselemente 54, 56, 57, 58, 59 anzupassen.

Der Aufsatz 50 ist auf das Basisgerät 40 über Steckverbindungen 98, 99 verbindbar. Die Steckverbindung 98 umfasst keine Datenleitungen, sondern aufsatzseitig lediglich eine oder mehrere Befestigungskrallen 52 und basisseitig eine oder mehrere geeignete Vertiefungen 98b um die Befestigungskrallen kraftschlüssig und/oder formschlüssig aufzunehmen. Die Steckverbindung 99 umfasst aufsatzseitig einen mit dem aufsatzseitigen Kommunikationsmittel 51 verbundenen elektronischen Stecker 99a, der mit einem basisseitig als Buchse ausgebildeten elektronischen Stecker 44 kraftschlüssig und/oder formschlüssig verbindbar ist. Der basisseitige Stecker 44 wiederum ist mit dem basisseitigen Kommunikationsmittel 41 verbunden, so dass wenn der Aufsatz 50 auf das Basisgerät aufgesteckt ist, das aufsatzseitige Kommunikationsmittel 51 mit dem Basisgerät 40 und/oder das basisseitige Kommunikationsmittel 41 mit dem Aufsatz 50, 50a, 50b, 50c über die Steckverbindung 99 kommunizieren kann, um beispielsweise die codierte Beschreibung 55 von Parametern der Interaktionselemente 54, 56, 57, 58, 59 vom Aufsatz 50 an das Basisgerät zu übermitteln, oder um die Interaktionselemente 54, 56, 57, 58, 59 durch das Basisgerät anzusteuern.

Wie weiter unten noch detaillierter beschrieben, handelt es sich bei dem Stecker 44 um eine Buchse für die Ansteuerung des Displays 54. Selbstverständlich kann auch die in Figur 2 dargestellte Buchse 49 für die Schalter 56-59 auf analoge Weise mit dem Aufsatz verbunden werden. Ebenso können Verbindungen in einer Verbindung zusammengefasst werden über welche auch die codierte Beschreibung 55 von Parametern der Interaktionselemente 54, 56, 57, 58, 59 an das basisseitige Kommunikationsmittel 41 übermittelt wird.

In einer Variante umfasst das Basisgerät 40 ein Anpassungsmittel 45, durch welches die Anpassung der Ansteuerung der Interaktionselemente 54, 56, 57, 58, 59 vornehmbar ist.

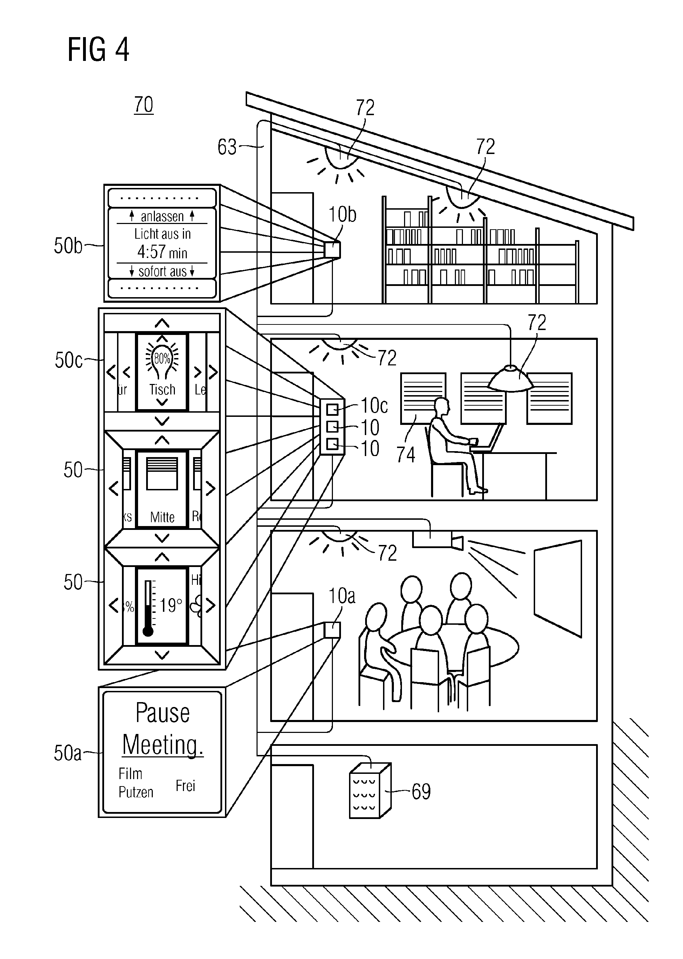

In einer andern Variante ist das das Basisgerät ausgestaltet und/oder adaptiert, die Anpassung der Ansteuerung der Interaktionselemente 54, 56, 57, 58, 59 aufgrund einer von einem Server 69 (siehe Figur 4) an das Basisgerät 40 sendbaren, dem Aufsatz, respektive der Interaktionselemente des Aufsatzes, angepassten Parametrisierung anzupassen. Die Anpassung der Ansteuerung der Interaktionselemente 54, 56, 57, 58, 59 wird also mit Hilfe des mit dem Basisgerät 40 verbunden Servers 69 vorgenommen. Der Server 69 stattet dabei das Basisgerät 40 aufgrund der codierten Beschreibung 55 mit einer den Interaktionselementen 54, 56, 57, 58, 59 angepassten Parametrisierung über ein Netzwerk aus.

Gemäß einer bevorzugten Ausführungsform werden Panel-artige Interaktionsdisplays, die auch mit Tastern oder anderen Hardwarebedienelementen versehen sein können, ähnlich steckbar zu machen wie herkömmliche Tasterkombinationen bei der KNX-Installation es heute sind. Damit kann das Design und die Funktion viel freier variiert werden als dies heute möglich ist, ohne dass man in die physische Gebäudeinstallation eingreift.

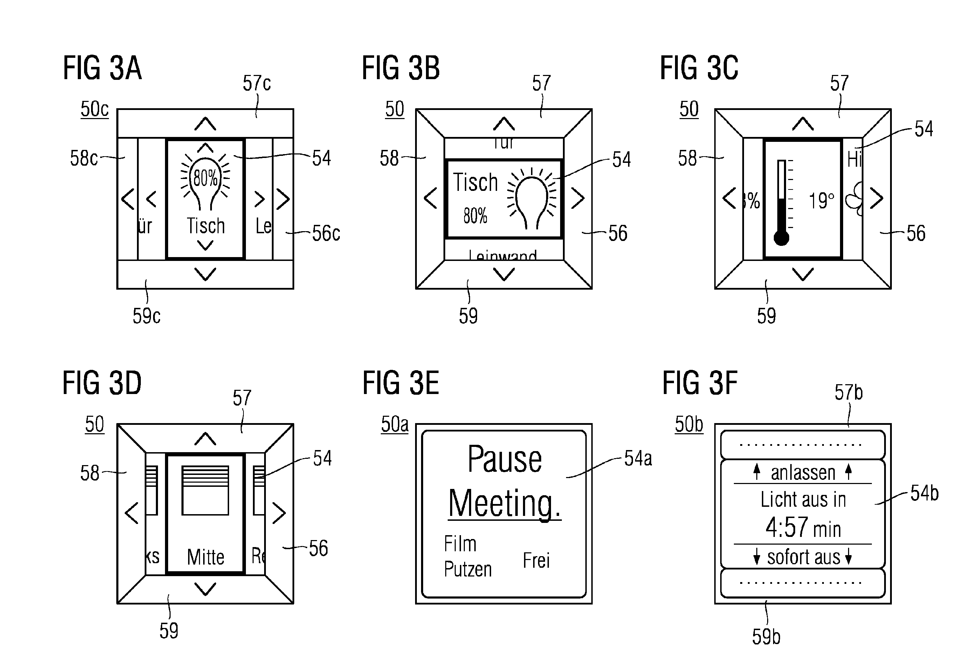

Bevorzugte Ausführungsformen der Erfindung bestehen aus dem Basisgerät 40, das z.B. in einer Unterputzdose installiert werden kann, und einem Satz an (Display-)Aufsätzen 50, 50a, 50b, 50c, die steckbar sind. Die (Display-)Aufsätze 50, 50a, 50b, 50c (wie weiter unten im Zusammenhang mit den Figuren 3A-3F beschrieben) unterscheiden sich durch verschiedene Parameter, die die Optik und die Zuverlässigkeit beeinflussen. Beispielsweise beinhaltet dies:
- Anzahl der Farben;
- Auflösung;
- Helligkeit und Kontrast;
- Anzeigetechnologie (LED, LCD, e-Ink) ;
- Vandalismussicherheit;
- Beständigkeit gegen Reinigungs- und Desinfektionsmittel.

Die Display-Aufsätze 50, 50a, 50b, 50c unterscheiden sich weiterhin durch ihre Bedienmöglichkeiten:
- Größe und Form-Faktor des Display-Bereichs;
- Berührungsempfindlichkeit des Displays (keine, Touchscreen, Multitouch);
- Anzahl, Position und Art von Tastern, Knöpfen, Drehreglern, Schiebereglern, weiteren Touch-Feldern;
- Weiteren Ausgabemöglichkeiten, z.B. akustisch (Summer, Piepser, Klingeln, Warntöne);
- Sensorik für die Interaktion, z.B. Näherungs- oder Bewegungssensor;
- Sensorik für die Gebäudesteuerung, z.B. Helligkeits- oder Temperatursensor.

Das Basisgerät 40 kommuniziert mit dem (Display-)Aufsatz über eine bei allen Aufsätzen gleiche Steckverbindung 99. Über dieses wird ein Datenaustauschprotokoll gefahren, das ein Display-Signal und andere Ausgabesignale zum aufgesteckten Aufsatz sendet und die Benutzereingaben sowie Sensorik-Werte zum Basisgerät 40.

Weiterhin sendet der (Display-)Aufsatz an das Basisgerät 40 eine codierte Beschreibung seiner Parameter, wie oben beschrieben (also z.B. Größe, Art und Position der Taster), und/oder Art und Auflösung des Displays. Dies ermöglicht es dem Basisgerät 40, seine Funktion und die angezeigten Informationen optimal auf den (Display-)Aufsatz und seine Interaktionselemente abzustimmen. Dies kann entweder durch das Basisgerät 40 selbst geschehen (das dann eine gewisse Eigenlogik zum Erzeugen verschiedener Anzeigevarianten besitzt) oder durch einen Server in der Gebäudesteuerung, das das Basisgerät 40 mit einer entsprechend parametrisierten Anzeige über das Netzwerk ausstattet.

Ebenso können Aufsätze ohne Display aufgesteckt werden, wodurch das Basisgerät 40 somit für Display-Nutzung vorbereitet ist, eine tatsächliche Anzeige jedoch erst mit Aufstecken eines entsprechenden Aufsatzes möglich wird. Auf diese Weise können z.B. auch weiterhin klassische Interaktionsgeräte (z.B. Schalter, Wippen) verbaut werden, welche rein durch einfaches Stecken des Displays (also ohne Wechsel des Basisgeräts oder neuer Verkabelung) zu einem Panel aufgewertet werden können.

Figur 2 zeigt den Aufbau eines App-basierten Interaktionsgerätes 10 für eine Unterputzdose 90, hier mit aufsteckbarem Display 54. Das Interaktionsgerät 10 umfasst das Basisgerät 40 für die Unterputzdose 90, sowie den Aufsatz 50. Der Aufsatz 50 umfasst eine oder mehrere Befestigungskrallen 52, das Display 54 und vier Schalter 56, 57, 58, 59 für eine 4-Wege-Navigation. Die Schalter 56, 57, 58, 59 sind als Drucktasten ausgebildet mit einer rechten Drucktaste 56, einer oberen Drucktaste 57, einer linken Drucktaste 58 und einer unteren Drucktaste 59.

Das Basisgerät 40 umfasst eine Buchse 44 für die Ansteuerung des Displays 54, eine Buchse 49 für einen Tasteranschluss zur Ansteuerung der Schalter 56, 57, 58, 59, ein Gehäuse 42 in welchem das Kommunikationsmittel 41 untergebracht ist. Das Kommunikationsmittel umfasst einen Mikrocontroller 12, das Anpassungsmittel 45, einen Speicher 30, eine Funkeinheit, und allfällige weitere Komponenten. Zudem umfasst das Basisgerät 40 eine Busklemme 43, an welche ein Anschlusskabel 93 für ein Gebäudesteuerungsbussystem 63 anschließbar ist. Auch umfasst das Basisgerät 40 eine weitere Klemme 46, an welche ein weiteres Anschlusskabel 96 für ein Datennetzwerk anschließbar ist.

Das Interaktionsgerät 10 selbst ist vorzugsweise in die Unterputzdose 90 verbaubar. Der Anwender sieht nur die Eingabegeräte 56, 57, 58, 59 und Ausgabegeräte 54 auf dem Aufsatz 50. Die Front des Aufsatzes 50 kann aber auch ein reines Touch-Display umfassen, oder ein kleineres Display 54 umgeben von mehreren Schaltern 56, 57, 58, 59.

Die Figuren 3A, 3B, 3C, 3D, 3E, 3F zeigen verschiedene Aufsätze 50, 50a, 50b, 50c mit verschiedenen Anordnungen für Ein- und Ausgabe sowie verschiedenen Anzeigeinhalten und Funktionen. Hardwareseitig zeigen die Figuren vier unterschiedliche Display-Steckaufsätze.

Figur 3A zeigt eine Aufsatz 50c, wobei eine App zur Auswahl einzelner Lichter mittels der rechteckigen Schalter 56c, 57c, 58c, 59c und dem Display 54 ausgeführt wird. Die gewünschten Lichter (z.B. Licht beim Tisch) lassen sich durch die horizontalen Schalter 56c, 58c auswählen, die Intensität des ausgewählten Lichtes lassen sich durch die vertikalen Tasten 57c, 59c auswählen.

Figur 3B zeigt den Aufsatz 50, wobei eine App zur Auswahl einzelner Lichter mit den trapezförmigen Schaltern 56, 57, 58, 59 und dem Display 54 ausgeführt wird. Im Gegensatz zu der in Figur 3A dargestellten Ausführungsform, wird in Figur 3B jedoch eine App ausgeführt, bei welcher sich das gewünschte Licht durch die vertikalen Schalter 57, 58 auswählen lässt, während die Intensität des Lichts sich durch die horizontalen Schalter 56, 58 auswählen lässt.

Figur 3C zeigt den Aufsatz 50, wobei eine App zur Regelung der Temperatur, Luftfeuchtigkeit und Lüftung ausgeführt wird. Mit Hilfe der Schalter 56, 57, 58, 59 lassen sich die Temperatur, Luftfeuchtigkeit oder Lüftung und die betreffenden Soll-Werte dafür einstellen. Das Display zeigt die jeweilige Auswahl und den jeweiligen Zielwert an.

Figur 3D zeigt den Aufsatz 50, wobei eine App zur Rolladensteuerung mit Hilfe der Schalter 56, 57, 58, 59 und dem Display 54 ausgeführt wird. Über die horizontalen Schalter 56, 58 lässt sich ein gewünschter Rolladen wählen, über die vertikalen Schalter 57, 59 kann der ausgewählte Rolladen bedient werden. Indem man lange drückt, werden alle Rolladen gewählt.

Figur 3E zeigt einen Aufsatz 50a, welcher ein reines Touch-Display 54a ohne mechanische Schalter umfasst. Der Aufsatz 50a wird durch eine App gesteuert, mit welcher eine Szenenauswahl per Tag, Cloud und Touchscreen 54a ausgewählt werden kann.

Figur 3F zeigt einen Aufsatz 50b, welcher ein Display 54b und lediglich zwei Schaltern 57b, 59b (oben und unten) umfasst. Der Aufsatz 50b wird durch eine App gesteuert, mittels der eine Nachfrage des Systems eine gewünschte Aktion eines Anwenders zulässt. Hier erlaubt eine Lichtsteuerung mit einem Zeitschalter, welche nach einer gewissen Zeit das Licht automatisch löschen würde, mittels Betätigung des unteren Schalters 59b das Licht sofort zu löschen, oder dieses für längere oder unbegrenzte Zeit mittels Betätigung des oberen Schalters 57b brennen zu lassen.

Anhand der in Figuren 3A bis 3F dargestellten Ausführungsbeispiele wird ersichtlich, dass die angezeigten Elemente auf einem Display in räumlichem Bezug zu den Schaltern stehen (die Anzeige auf dem Display ist also vorzugsweise auf die Anordnung der Taster abgestimmt, was durch die Selbstbeschreibung des Display-Aufsatzes ermöglicht wird), und dass Aufgrund der großen funktionalen Variationsbreite durch die App-Plattform auf dem Display beliebige Inhalte denkbar sind. Einige sind exemplarisch in Figur 4 im größeren Kontext eines Gebäudes 70, welches eine elektronische Gebäudeinfrastruktur umfasst dargestellt.

In einem Gebäude würden typischerweise viele Interaktionsgeräte 10 verwendet, oft auch viele in einem Raum. Dies ist schematisch in Figur 4 dargestellt. Bei einem Umzug der Nutzer innerhalb des Gebäudes, z.B. der Umwandlung eines Büros in einen Besprechungsraum oder umgekehrt, würde man die Display-Aufsätze einfach tauschen.

Figur 4 zeigt daher das Gebäude 70 mit mehreren Räumen und mit einem Gebäudeautomatisierungssystem. Das Gebäudeautomatisierungssystem umfasst einen Gebäudeautomatisierungs-Server 69, ein Bus-System 63, Interaktionsgeräte 10, 10a, 10b, 10c, sowie Aktoren und Sensoren. Die in Figur 4 dargestellten Interaktionsgeräte 10 umfassen dabei jeweils ein Basisgerät 40 (Fig. 2) und den Aufsatz 50 (Fig. 2, Fig. 3B-3D). Das Interaktionsgerät 10a umfasst das Basisgerät 40 (Fig. 2) und den Aufsatz 50a (Fig. 2, Fig. 3E). Das Interaktionsgerät 10b umfasst das Basisgerät 40 (Fig. 2) und den Aufsatz 50b (Fig. 2, Fig. 3E). Das Interaktionsgerät 10c umfasst das Basisgerät 40 (Fig. 2) und den Aufsatz 50c (Fig. 2, Fig. 3A).

Der Gebäudeautomatisierungs-Server 69 und die Interaktionsgeräte 10, 10a, 10b, 10c sind mit dem Bus-System 63 verbunden. Die Gebäudeinfrastruktur umfasst auch die oben erwähnten Aktoren und Sensoren, beispielsweise Lampen 72, Jalousien 74, Thermometer, Temperaturregelungen, Belegungssysteme, welche ebenfalls an das Bussystem 63 angeschlossen sind und welche sich daher durch geeignet programmierte Interaktionsgeräte 10, 10a, 10b, 10c bedienen lassen.

Gemäß bevorzugten Ausführungsformen lässt sich ein Interaktionsgerät somit durch Aufstecken eines Aufsatzes an die jeweiligen Bedürfnisse und/oder Gebäudeinfrastruktur anpassen. Dazu wird der jeweilige Aufsatz 50, 50a, 50b, 50c auf das Basisgerät 40 aufgesteckt. Eine codierte Beschreibung 55 von Parametern des jeweils aufgesteckten Aufsatzes 50, 50a, 50b, 50c, vorzugsweise von dessen Interaktionselementen 54, 54a, 54b, 56, 56c, 57, 57b, 57c, 58, 58c, 59, 59b, 59c wird von dem jeweiligen Aufsatz 50, 50a, 50b, 50c an das Basisgerät 40 gesendet. Das Basisgerät 40 empfängt und verarbeitet die codierte Beschreibung 55. Die Interaktionselemente 54, 54a, 54b, 56, 56c, 57, 57b, 57c, 58, 58c, 59, 59b, 59c des jeweiligen Aufsatzes 50a, 50b, 50c werden durch das Basisgerät 40 angesteuert. Die Ansteuerung des Interaktionselements 54, 54a, 54b, 56, 56c, 57, 57b, 57c, 58, 58c, 59, 59b, 59c wird durch das Basisgerät 40 anhand der an das Basisgerät 40 übermittelten codierten Beschreibung 55 dem aufgesteckten Aufsatz 50a, 50b, 50c, respektive dessen jeweiligen Interaktionselementen 54, 54a, 54b, 56, 56c, 57, 57b, 57c, 58, 58c, 59, 59b, 59c angepasst vorgenommen.

Vorteile von bevorzugten Ausführungsformen liegen darin, den Ansatz der Steckbarkeit einfacher Bedienelemente auf viel komplexere Interaktionspanels zu übertragen, die sowohl Displays als auch andere Interaktionselemente beinhalten. Dies ist nicht nur eine Miniaturisierung des (steckbaren) Anschlusses von Anzeigegeräten, beispielsweise PC-Monitoren mit VGA-Anschluss. Als wesentliche Merkmale kommen die Kombination einer Anzeige mit anderen Bedienelementen hinzu, die aber erst durch eine Selbstbeschreibung des Display-Aufsatzes gegenüber dem Basisgerät 40 zur effizienten Anpassung der angezeigten Informationen und der Interaktionsweise führt.

Das Basisgerät 40 kann aufgrund dieser Selbstbeschreibung des (Display-)Aufsatzes seine Ein-/Ausgabe entsprechend adaptieren. Für eine solche Adaption muss das Basisgerät in der Lage sein zumindest eine gewisse Logik auszuführen, nämlich die Ansteuerung des aufgesteckten Displays diesem anzupassen. Dies kann beispielsweise in Form von auf das Basisgerät 40 nachladbaren Apps erfolgen.

Die Vorteile der Erfindung liegen auf der Hand:
- Bedienmöglichkeiten, also sowohl Funktion als auch Design, können durch einfaches, werkzeugloses Ab- und Aufstecken eines Display-Aufsatzes vor Ort ausgetauscht werden - ggf. im Beisein des Benutzers oder sogar durch den Endnutzer selbst. Es wird kein Eingriff in die Verkabelung des Gebäudes nötig, und das Basisgerät verbleibt in der Unterputzdose.
- Dies erlaubt für den Benutzer eine leichtere, den eigenen Bedürfnissen angepasste Bedienung.
- Es erlaubt für den Ausstatter oder Betreiber des Gebäudes eine kostengünstige Anpassung an Benutzerwünsche. Dies ist insbesondere bei Nutzbauten, die jeweils für eine beschränkte Zeit unterschiedlich genutzt werden, attraktiv. So kann ein Meeting-Raum in Büros unterteilt werden, die dann andere Interaktionselemente in die Wand bekommen.
- Es erlaubt dem Hersteller eine attraktive Produktpolitik - er kann ein Basisgerät in hohen Stückzahlen herstellen, verkaufen und verbauen lassen, und wenn neue Designs oder Displaytechnologien verfügbar werden, diese nachproduzieren und als Upgrades auf den Markt bringen. Ebenfalls kann er eine Marktsegmentierung mit den Display-Aufsätzen durchführen; beispielsweise bekommen Krankenhäuser oder die chemische Industrie die (teureren) desinfizierbaren Displays, Bürobauten hingegen "normale" Displays.

## Patentansprüche

1. Interaktionsgerät (10, 10a, 10b, 10c) für eine Gebäudeinfrastruktur, umfassend ein Basisgerät (40) und einen auf das Basisgerät aufsteckbaren Aufsatz (50, 50a, 50b, 50c);
wobei der Aufsatz (50, 50a, 50b, 50c) mindestens ein Interaktionselement (54, 54a, 54b, 56, 56c, 57, 57b, 57c, 58, 58c, 59, 59b, 59c) und ein aufsatzseitiges Kommunikationsmittel (51) umfasst;
wobei das Basisgerät (40) ein basisseitiges Kommunikationsmittel (41) umfasst;
wobei das mindestens eine Interaktionselement (54, 54a, 54b, 56, 56c, 57, 57b, 57c, 58, 58c, 59, 59b, 59c) durch das basisseitige Kommunikationsmittel (41) ansteuerbar ist;
wobei durch das aufsatzseitige Kommunikationsmittel (51) eine codierte Beschreibung (55) von Parametern des mindestens einen Interaktionselementes (54, 54a, 54b, 56, 56c, 57, 57b, 57c, 58, 58c, 59, 59b, 59c) an das Basisgerät (40) übermittelbar ist;
und wobei das Basisgerät (40) ausgestaltet und/oder adaptiert ist, anhand der übermittelten codierten Beschreibung (55) der Parameter des Interaktionselementes (54, 54a, 54b, 56, 56c, 57, 57b, 57c, 58, 58c, 59, 59b, 59c) die Ansteuerung des Interaktionselementes (54, 54a, 54b, 56, 56c, 57, 57b, 57c, 58, 58c, 59, 59b, 59c) anzupassen.

2. Interaktionsgerät (10, 10a, 10b, 10c) nach Anspruch 1, wobei das mindestens eine Interaktionselement (54, 54a, 54b, 56, 56c, 57, 57b, 57c, 58, 58c, 59, 59b, 59c) ein Display (54, 54a, 54b), insbesondere ein Toch-Display, umfasst.

3. Interaktionsgerät (10, 10a, 10b, 10c) nach einem der vorhergehenden Ansprüche, wobei das aufsatzseitige Kommunikationsmittel (51) mit dem Basisgerät (40) und/oder das basisseitige Kommunikationsmittel (41) mit dem Aufsatz (50, 50a, 50b, 50c) über eine Steckverbindung (99) kommuniziert.

4. Interaktionsgerät (10, 10a, 10b, 10c) nach einem der vorhergehenden Ansprüche, wobei das Basisgerät (40) ein Anpassungsmittel (45) umfasst, durch welches die Anpassung der Ansteuerung des Interaktionselementes (54, 54a, 54b, 56, 56c, 57, 57b, 57c, 58, 58c, 59, 59b, 59c) vornehmbar ist.

5. Interaktionsgerät (10, 10a, 10b, 10c) nach einem der vorhergehenden Ansprüche, wobei das Basisgerät (40) ausgestaltet und/oder adaptiert ist, die Anpassung der Ansteuerung des Interaktionselements (54, 54a, 54b, 56, 56c, 57, 57b, 57c, 58, 58c, 59, 59b, 59c) aufgrund einer von einem Server (69) empfangbaren dem mindestens einen Interaktionselement (54, 54a, 54b, 56, 56c, 57, 57b, 57c, 58, 58c, 59, 59b, 59c) angepassten Parametrisierung anzupassen.

6. Aufsatz (50, 50a, 50b, 50c) für ein Interaktionsgerät (10, 10a, 10b, 10c) für eine Gebäudeinfrastruktur, umfassend mindestens ein Interaktionselement (54, 54a, 54b, 56, 56c, 57, 57b, 57c, 58, 58c, 59, 59b, 59c), ein aufsatzseitiges Kommunikationsmittel (51) und einen aufsatzseitigen Stecker (52, 99a) zum Aufstecken des Aufsatzes (50, 50a, 50b, 50c) auf ein Basisgerät (40);
wobei durch das aufsatzseitige Kommunikationsmittel (51) eine codierte Beschreibung (55) von Parametern des Interaktionselementes (54, 54a, 54b, 56, 56c, 57, 57b, 57c, 58, 58c, 59, 59b, 59c) an das Basisgerät (40) übermittelbar ist.

7. Aufsatz (50, 50a, 50b, 50c) nach Anspruch 6, wobei das mindestens eine Interaktionselement (54, 54a, 54b, 56, 56c, 57, 57b, 57c, 58, 58c, 59, 59b, 59c) ein Display (54, 54a, 54b), insbesondere ein Toch-Display, umfasst.

8. Aufsatz (50, 50a, 50b, 50c) nach einem der Ansprüche 6 oder 7, wobei das aufsatzseitige Kommunikationsmittel (51) mit der aufsatzseitige Stecker (99a) verbunden ist, um über den aufsatzseitigen Stecker (99a) mit dem Basisgerät (40) zu kommunizieren.

9. Basisgerät (40) für ein Interaktionsgerät (10, 10a, 10b, 10c) für eine Gebäudeinfrastruktur, umfassend ein basisseitiges Kommunikationsmittel (41) und einen basisseitigen Stecker (44, 49, 98b);
wobei das Basisgerät (40) ausgestaltet und/oder adaptiert ist, einen auf das Basisgerät (40) aufsteckbaren Aufsatz (50, 50a, 50b, 50c) anzusteuern und eine codierte Beschreibung (55) von Parametern des aufsteckbaren Aufsatzes (50, 50a, 50b, 50c) zu empfangen;
und wobei das Basisgerät (40) ausgestaltet und/oder adaptiert ist, anhand der empfangenen codierten Beschreibung (55) der Parameter des aufsteckbaren Aufsatzes (50, 50a, 50b, 50c) die Ansteuerung des aufsteckbaren anzupassen.

10. Basisgerät (40) nach Anspruch 9, wobei das basisseitige Kommunikationsmittel (41) mit dem basisseitigen Stecker (44, 49) verbunden ist, um über den basisseitigen Stecker (44, 49) mit dem aufsteckbaren Aufsatz (50, 50a, 50b, 50c) zu kommunizieren.

11. Basisgerät (40) nach Anspruch 9 oder 10, umfassend ein Anpassungsmittel (45), durch welches die Ansteuerung des Interaktionselementes (54, 54a, 54b, 56, 56c, 57, 57b, 57c, 58, 58c, 59, 59b, 59c) anpassbar ist.

12. Basisgerät (40) nach einem der Ansprüche 9-11, wobei das Basisgerät (40) ausgestaltet und/oder adaptiert ist, die Anpassung der Ansteuerung des Aufsatzes (50, 50a, 50b, 50c) aufgrund einer von einem Server (69) empfangbaren dem mindestens einen Interaktionselement (54, 54a, 54b, 56, 56c, 57, 57b, 57c, 58, 58c, 59, 59b, 59c) angepassten Parametrisierung anzupassen.

13. Verfahren zum Anpassen eines Interaktionsgerätes (10, 10a, 10b, 10c) für eine Gebäudeinfrastruktur, umfassend die Verfahrensschritte:
Aufstecken eines Aufsatzes (50, 50a, 50b, 50c) auf ein Basisgerät (40) des Interaktionsgerätes (10, 10a, 10b, 10c); Übermitteln einer codierten Beschreibung (55) von Parametern eines Interaktionselementes (54, 54a, 54b, 56, 56c, 57, 57b, 57c, 58, 58c, 59, 59b, 59c) des Aufsatzes (50, 50a, 50b, 50c) von dem Aufsatz (50, 50a, 50b, 50c) an das Basisgerät (40); Ansteuern des Interaktionselementes (54, 54a, 54b, 56, 56c, 57, 57b, 57c, 58, 58c, 59, 59b, 59c) durch das Basisgerät (40), wobei die Ansteuerung des Interaktionselements (54, 54a, 54b, 56, 56c, 57, 57b, 57c, 58, 58c, 59, 59b, 59c) durch das Basisgerät (40) anhand der an das Basisgerät (40) übermittelten codierten Beschreibung (55) dem Interaktionselement (54, 54a, 54b, 56, 56c, 57, 57b, 57c, 58, 58c, 59, 59b, 59c) angepasst vorgenommen wird.

14. Verfahren nach Anspruch 13, wobei das mindestens eine Interaktionselement (54, 54a, 54b, 56, 56c, 57, 57b, 57c, 58, 58c, 59, 59b, 59c) ein Display (54, 54a, 54b), insbesondere ein Toch-Display, umfasst.

15. Verfahren nach einem der Ansprüche 13 oder 14, wobei Aufsatz (50, 50a, 50b, 50c) mit dem Basisgerät (40) und/oder das Basisgerät (40) mit dem Aufsatz (50, 50a, 50b, 50c) über eine Steckverbindung (99) kommuniziert.

16. Verfahren nach einem der Ansprüche 13-15, wobei das Basisgerät (40) ein Anpassungsmittel (45) umfasst, durch welches die Ansteuerung des Interaktionselementes (54, 54a, 54b, 56, 56c, 57, 57b, 57c, 58, 58c, 59, 59b, 59c) anpassbar ist.

17. Verfahren nach einem der Ansprüche 13-16, wobei die Anpassung der Ansteuerung des Interaktionselements (54, 54a, 54b, 56, 56c, 57, 57b, 57c, 58, 58c, 59, 59b, 59c) mit Hilfe eines mit dem Basisgerät (40) verbunden Server (69) vorgenommen wird, der das Basisgerät (40) vorzugsweise aufgrund der codierten Beschreibung (55) mit einer dem Interaktionselement (54, 54a, 54b, 56, 56c, 57, 57b, 57c, 58, 58c, 59, 59b, 59c) angepassten Parametrisierung über ein Netzwerk ausstattet.
